Europäisches Patentamt

European Patent Office

Office européen des brevets

(19)

(11) **EP 0 781 108 B1**

(12) **EUROPEAN PATENT SPECIFICATION**

(45) Date of publication and mention
of the grant of the patent:
**08.05.2002 Bulletin 2002/19**

(51) Int Cl.[7]: **A47J 43/14**, A23B 5/00,
A23L 1/317

(21) Application number: **95932461.7**

(22) Date of filing: **08.09.1995**

(86) International application number:
**PCT/US95/11480**

(87) International publication number:
**WO 96/07348 (14.03.1996 Gazette 1996/12)**

(54) **METHOD AND SYSTEM FOR DRAINING GROUND MEATS**

VERFAHREN UND SYSTEM ZUM ENTFETTEN VON HACKFLEISCH

PROCEDE ET SYSTEME DE DEGRAISSAGE DE VIANDE HACHEE

(84) Designated Contracting States:
**AT BE CH DE DK ES FR GB GR IE IT LI LU MC NL
PT SE**

(30) Priority: **09.09.1994 US 303321
09.09.1994 US 304381**

(43) Date of publication of application:
**02.07.1997 Bulletin 1997/27**

(73) Proprietor: **Taco Bell Corp.
Irvine, CA 92614 (US)**

(72) Inventors:
• **Margolis, Geoffrey
Los Angeles, CA 90049 (US)**

• **Pelaez, Joaquin
Frisco, TX 75034 (US)**

(74) Representative:
**Ebner von Eschenbach, Jennifer et al
Ladas & Parry,
Dachauerstrasse 37
80335 München (DE)**

(56) References cited:
**US-A- 754 310          US-A- 2 355 548
US-A- 4 352 324       US-A- 4 818 557
US-A- 5 189 946       US-A- 5 286 514
US-A- 5 397 585       US-A- 5 405 632**

**Description**

FIELD OF THE INVENTION

This invention relates to systems for removing fat from a cooked ground meat product and, in particular embodiments, to such systems which remove fat economically, while maintaining desirable texture and taste characteristics.

This invention also is directed to a method for producing low fat cooked ground meat, employing a density differential fat separation process and related apparatus.

BACKGROUND OF THE INVENTION

In recent years, public concern regarding diet, in particular, fat intake, has dramatically increased. The focus on fat intake is particularly important as it has been found to relate to heart disease and other ailments, which are believed to afflict a large percentage of individuals throughout the world.

Blood cholesterol levels have been recognized as a major factor in determining whether an individual will suffer from heart disease. A major factor contributing to a relatively high blood cholesterol level is a high dietary intake of saturated fats.

The American Heart Association ("AHA") has recommended that, to reduce the risk of heart disease and cancer, individuals should reduce their daily dietary intake of fats and cholesterol. Specifically, the AHA has recommended (1) that individuals receive only 30% of their daily caloric intake from fat with only 10% of that amount being derived from saturated fat, and (2) that dietary cholesterol intake be kept below 300 milligrams per day.

To aid individuals in achieving these AHA recommendations, many consumer products, such as low fat cookbooks and low fat foods, are currently on the market. Nonetheless, many individuals avail themselves of the conveniences gained by eating in restaurants or ordering food from take-out restaurants. Unfortunately, many foods served in some of these establishments are relatively high in fat, due to the use of high fat meats.

The restaurant and food processing industry is aware of the growing public dietary conscience. Indeed, many restaurants have begun to offer low fat products on their menus. However, there is a concern that the removal of fat will adversely affect the taste of the food product and/or will add costly steps to food processing system.

Several approaches have been utilized in attempts to produce low fat meat products. One approach is to simply use low fat meat as a starting material. However, low fat meat can be relatively expensive. Further, low fat meats tend to be less "juicy" and less tasty because of the lack of fat present when cooking the meat.

Another approach is to reduce the fat in meat of relatively high fat content by cooking the meat and separating the fat rendered in the cooking process. This approach, unfortunately, also suffers from various problems. In particular, separating the fat from the meat is extremely difficult and expensive on a large industrial scale because cooked meat forms an interwoven matrix that holds the rendered fat, making draining difficult as well as time consuming. Further, even if separation of the fat can be achieved, this approach results in a low yield weight of low fat meat, since much of the initial raw meat weight is lost in the fat removal step. This increases the cost of the processed meat.

Various attempts at removing fat content from meats have been explored. For instance, U.S. Patents Nos. 4,980,185 and 5,116,633 to Small are directed to a method for making meat products having a reduced saturated fat and cholesterol content. Heated unsaturated oil is added to raw meat. The heated unsaturated oil acts as an extracting agent for cholesterol. Further, due to the heated oil, fats in the meat melt and become soluble. The heated oil containing the cholesterol and fat is separated from the meat with a heated aqueous fluid. According to these patents, fat content is reduced from 20.8% to 18.5% and cholesterol is reduced from 115 mg to 80 mg of cholesterol per 100 g of beef.

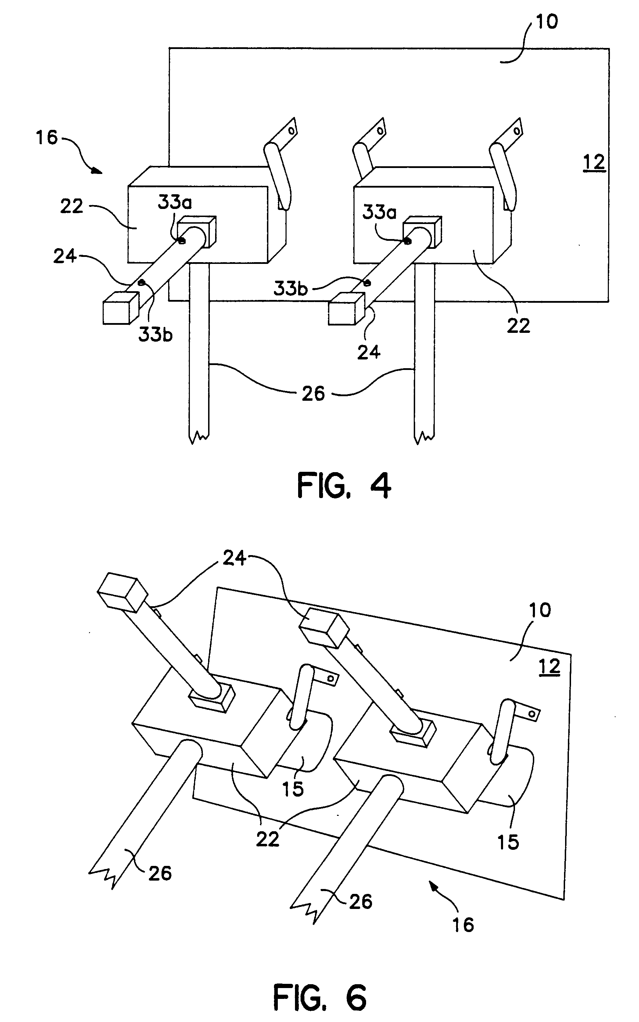

U.S. Patent No. 3,949,659 to Hunt is directed to an apparatus and related method for processing meat. In the Hunt apparatus, a large vat is equipped such that fat can be separated from cooked meat. However, the Hunt apparatus and method utilize a pressing force to remove fat from meat. This can adversely impact on the texture and other qualities of the meat. Hunt describes a cooking vessel (or kettle) 13 provided with a number of relatively complex mechanisms for separating liquified fat from cooked meat. The kettle 13 described by Hunt operates with a "separation device" 48 (Fig. 3 of the Hunt patent) composed of a perforated pan 50 having a downward extending sidewall portion 52 and bottom portion 53. A support structure composed of rods 54, a threaded shaft 56, a cross support 60 and clamps 61 allow the pan 50 to be positioned within the kettle and rotated so as to draw the pan further into or outward of the kettle interior.

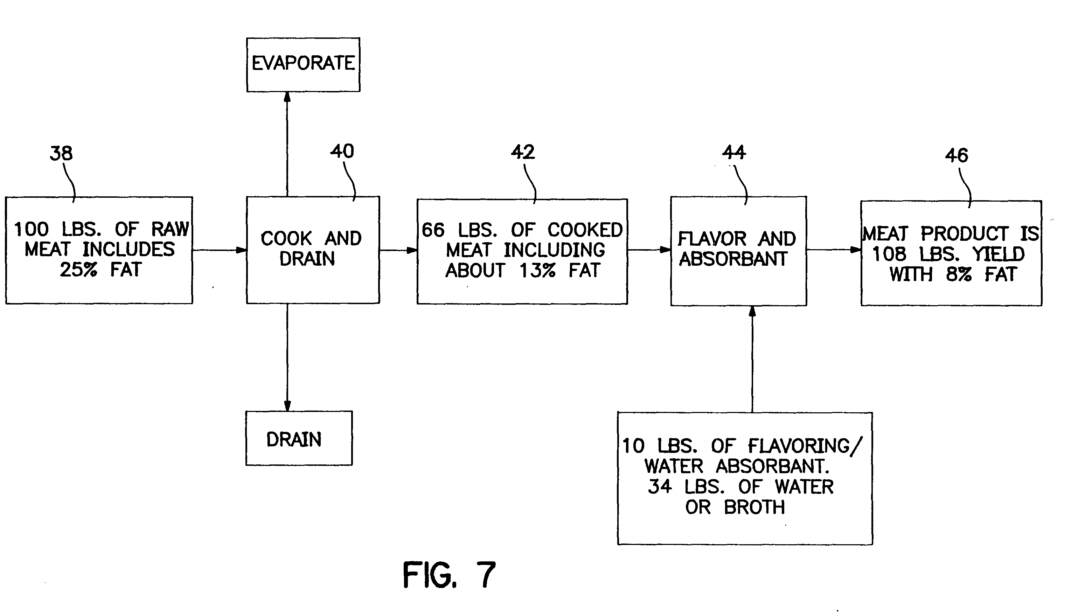

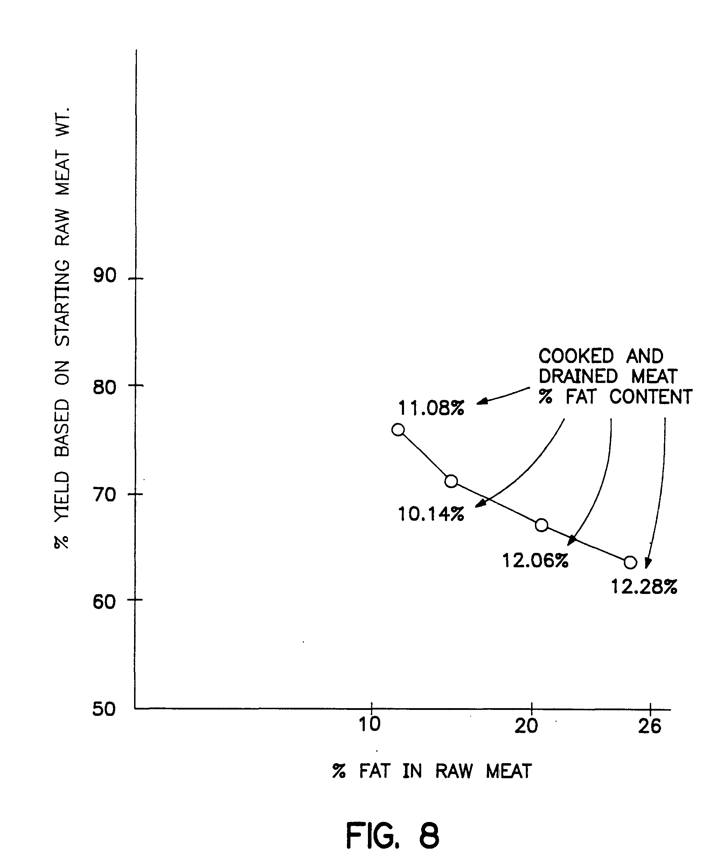

Hunt's separation device 48 is placed in the kettle and pressed downward onto the meat, after the meat is cooked, so as to draw the liquified fat through the pan, while maintaining the cooked meat below the pan (see Figure 6 of the Hunt patent). This requires additional post cooking processing steps of removing the cooking agitator mechanism 29 and installing the separation device 48 onto the kettle. Furthermore, the kettle 13 is provided with either a tilting support for pouring out the separated liquified fat (Fig. 8 of the Hunt patent) or a pump mechanism for pumping out the separated liquified fat (Fig. 7 of the Hunt patent), requiring yet further processing steps and equipment.

U.S. Patent No. 4,847,099 to Elinsky is directed to an apparatus and method for defatting and cooking meats where the meat is suspended above boiling water and exposed to steam. During cooking the fat from the meat drips off into the boiling water. However, such process and related apparatus is not believed to produce the "juicy" meat product and/or taste which would have wide consumer appeal.

The inventor of the present invention has proposed other fat removing techniques. For example, U.S. Patent No. 4,948,607 to Margolis describes a method and apparatus for removing fat from a preformed meat patty by applying pressure to a cooked patty sufficient to exude a substantial portion of liquified fat from the product. While such process and apparatus work well, they are not designed to make a ground, i.e., crumbly, low fat meat product.

U.S. Patents Nos. 4,980,185 and 5,116,633 to Small are directed to a further method for making meat products having a reduced saturated fat and cholesterol content. Heated unsaturated oil is added to raw meat. The heated unsaturated oil acts as an extracting agent for cholesterol. Further, due to the heated oil, fats in the meat melt and become soluble. The heated oil containing the cholesterol and fat is separated from the meat with a heated aqueous fluid. According to these patents, fat content is reduced from 20.8% to 18.5% and cholesterol is reduced from 115 mg to 80 mg of cholesterol per 100 g of beef.

Further, still some of these processes can be relatively expensive and time consuming. Indeed, some of these processes can also adversely affect the texture and taste of the product. Moreover, the amount of fat removal tends to be either insufficient or tends to cause a significant reduction in the overall product yield. Thus, there is a need in the industry for an improved system of removing fat from a food product that minimizes adverse affects on the texture and taste of the product, that is relatively simple and cost effective and that does not significantly reduce (or reduce at all) the overall product yield.

## SUMMARY OF THE DISCLOSURE

A first object of the present invention is a system as claimed in claim 1 attached herein. A second object of the present invention is a system as claimed in claim 7 attached herein. A third object of the present invention is a method as claimed in claim 9.

An object of preferred embodiments of the present invention is to provide a method and systems for reducing the fat content in a meat product, preferably to 10% by weight or less. A further object of preferred embodiments of the present invention is to provide a method and systems for producing a meat product with reduced fat content, in an economical manner, that has a taste and texture acceptable to consumers.

Yet another objective of the present invention is to provide systems that allow fat separation to be easily performed in industrially available cookers. These and other objects will be apparent from the description below.

By the use of the method and systems of the present invention, a meat product with a fat content of about 10% or less, and a weight approximately equal to or greater than the weight of the raw ground meat prior to cooking, can be achieved.

The process of the present invention can best be understood by reference to the examples and figures. However, the examples are intended to be illustrative and not to be construed so as to limit the invention as set forth in the claims and specification.

## BRIEF DESCRIPTION OF THE DRAWINGS

Figure 1 is a perspective view of a meat cooker and drainer.

Figure 2a is a perspective view of a prior art industrial meat cooker.

Figure 2b is a front view of the meat cooker of Figure 2a.

Figure 2c is a top perspective view of the meat cooker of Figure 2a.

Figure 3 is a cross section view of a meat cooker with a liquid phase draining system according to a preferred embodiment of the present invention.

Figure 4 is rear perspective view of a pair of draining boxes according to a preferred embodiment of the present invention.

Figure 5a is a front perspective view of the pair of draining boxes of Figure 4.

Figure 5b is a top perspective view of a draining box of Figure 4.

Figure 5c is a perspective view of a plate and arm component of a draining box of Figure 4.

Figure 6 is a perspective view of the pair of draining boxes of Figure 4, in an open position.

Figure 7 is a schematic diagram illustrating steps of a process according to an embodiment of the present invention.

Figure 8 is a graph showing a plot of cooked meat yield vs. initial percent fat in the starting raw meat and is also a graph depicting the yield and fat percent of cooked ground meat produced from raw ground meat of varying percent fat contents.

Figure 9 is a graph showing a plot of the fat content (in grams of fat) for either raw meat or cooked meat after liquid separation against the percent fat in the raw meat used to produce the cooked and drained meat and is also a graph illustrating the uniformity of absolute fat content in cooked ground meat made from raw ground meat of varying percent fat contents.

Figure 10 depicts a side view of a first embodiment of the fat extraction apparatus of the present invention.

Figure 11 is a three dimensional representation of the first embodiment of the extracting system located within a cooker.

Figure 12 is a schematic flow chart illustrating the first embodiment of the present invention.

## DETAILED DESCRIPTION OF THE PREFERRED EMBODIMENT

It is well known that the cooking of raw ground meat typically produces a mixture of solid "chunky" cooked ground meat and a liquid phase consisting of liquified fat, and water-based broth formed during the denaturization (cooking) of the meat proteins.

Surprisingly, it has been discovered (see Example 2 below) that, after separation of the liquid phase, the cooked ground meat is not only low in fat content, but also only contains only about 8 grams of fat for every 100 grams of raw meat cooked, irrespective of the initial fat content of the raw ground meat.

Thus, according to this principle, low fat (10 to 12% by weight fat) cooked ground meat can be produced from any percent fat raw meat, and in particular, from relatively inexpensive high fat ($^-$25% by weight) raw meat - provided, of course, that the rendered liquid phase can be separated from the cooked meat. However, many cooking environments do not accommodate traditional liquid phase separation processes well, if at all.

At the small "kitchen" scale, separation of the liquid phase is easily achieved due to the relatively small quantity of meat (0.45 to 0.90 kg, namely 1 to 2 lbs.) that is generally cooked in a skillet of relatively large heated surface area ($\sim$ 645.26 x $10^{-4}$ $m^2$, namely $^-$100 inches squared). Thus, when the meat is distributed over the heated surface, it has an average, bed depth of generally substantially less than about 2.54 x $10^{-2}$ m (1 inch). This thin bed of meat cooks quickly (in 5 to 10 minutes) and allows the rendered fat to easily drain to the skillet surface. Nevertheless, physical separation of the fat from the meat still necessitates transferring the meat/fat mixture to a screening device, with sufficiently small openings such that the fat can be separated from the meat.

On the other hand, at industrial scale, relatively large quantities (226 to 1814 kg, namely 500 to 4000 lbs.) of raw ground meat need to be efficiently cooked in less than about 60 minutes per batch. This is generally achieved by processing meat in either horizontal or vertical cookers fitted internally with various types of agitator ribbons or blades.

These agitators are specifically designed to continuously circulate meat from the central region of the cooker to its outer heated walls and then back to the central region. By using this design approach, the heated surface area of the cooker is brought into frequent and rapid contact with the entire meat mass, thus permitting the meat to be rapidly cooked. In this manner, a much smaller heated surface area to meat volume ratio (ranging from 3,28 to 9,84 $m^{-1}$, namely 1 to 3 $ft^{-1}$) than the so-called "kitchen" scale operation (with a surface to volume ratio ranging from 65.6 to 131.2 $m^{-1}$, namely 20 to 40 $ft^{-1}$) can be used to cook large quantities of meat. For purposes of illustration, some example dimensions for typical "kitchen" scale and "industrial" scale operations are shown in Table 1 below.

TABLE 1

| Surface to volume ratios of typical "Industrial Scale" cookers as compared to "Kitchen Scale" cookers | | | | | | |
|---|---|---|---|---|---|---|
| **PROCESS AND MEAT QUANTITY COOKED** | | **Approx. Major Dimensions of Processor** | | | **Heated Surface Area** | **Meat Volume \*** | $\frac{A}{V}$ |
| | | **Length ft.** | **Width ft.** | **Meat bed depth ft** | $ft^2$ **"A"** | $ft^3$ **"V"** | $ft^{-1}$ |
| 1 | "Kitchen" Operation | 0.8 | 0.8 | <0.08 | 0.64 | 0.016 | 40 |
| | _ 11b meat _ 21b meat | 0.8 | 0.8 | <0.08 | 0.64 | 0.032 | 20 |

\* Calculated from meat quantity cooked and density of raw meat ($\sim$ 1073 kg/$m^3$, namely $\sim$ 67lb/$ft^3$)

TABLE 1   (continued)

| Surface to volume ratios of typical "Industrial Scale" cookers as compared to "Kitchen Scale" cookers A | | | | | | |
|---|---|---|---|---|---|---|
| PROCESS AND MEAT QUANTITY COOKED | | Approx. Major Dimensions of Processor | | | Heated Surface Area | Meat Volume * | |
| | | Length ft. | Width ft. | Meat bed depth ft | ft$^2$ "A" | ft$^3$ "V" | ft$^{-1}$ |
| 2 | "Industrial" Scale Operation _450lb meat _ 2500lb meat _ 4000lb meat | 4.0 7.0 11.0 | 2.5 ~3.5 ~4.0 | ~1.0 ~1.25 ~1.75 | 18** 42** 82** | 7 40 65 | 2.6 1.0 1.3 |

* Calculated from meat quantity cooked and density of raw meat
(~ 1073 kg/m$^3$, namely ~ 67lb/ft$^3$)

** Estimated from approximately shape of processor.

Many large scale industrial cookers are of the horizontal type, with heated outer walls and motor driven horizontal ribbon blender type agitators traversing the entire length of the cooker. The cookers are very compact in size, due to the use of small heated surface area to meat volume ratios. For example, the horizontal Blentech VersaTherm (Trademark) blending cooker Model TP - 28133 (manufactured by Blentech Corp., Rohnert Park, California) can cook approximately 1814 to 2268 kg (4000 to 5000 lbs.) of raw ground meat in less than 60 minutes, yet is only 3.35 (11 ft.) long and approximately 1.21 m (4 ft.) wide by 1.21 m (4 ft.) deep.

The compact design of industrial cookers has major economic advantages, but unfortunately the small surface to volume ratio of these cookers result in dramatic increases (to about 0.60 m, namely 2 feet) in meat bed depth causing significant limitations with regard to fat separation.

Thus, in contrast to the "kitchen" scale operation where both cooking and fat separation'may be easily achieved, industrial scale cookers are typically designed for efficient cooking but not for ease of fat separation. Embodiments of the present invention employ the above discussed principles of separating the liquid phase from a cooked ground meat product to produce relatively low fat cooked ground meat, preferably on the industrial scale.

Embodiments of the present invention relates to a method and apparatus for removing fat from a food product, such as cooked ground meat commonly used in tacos and other similar foods. Further embodiments of the present invention are particularly well suited for use with various conventional industrial meat cookers. Yet further embodiments of the present invention comprise meat cooking systems which themselves comprise integral fat draining equipment.

The fat separation method of preferred embodiments of the present invention is based upon the concept that it is possible to construct or add drainage openings to a cooking vessel such that these openings will remain open and not contaminated with meat, thus permitting in situ draining of liquid fat from a cooked meat/liquid fat mixture produced in the cooking vessel. In this manner, separation is possible without the major processing complications of either transferring the cooked meat/liquid mixture to some external separating device (such as a screen) or the necessity to use or place further processing devices within the cooking vessel.

Further, according to preferred embodiments of the present invention, the draining method is effective even in large scale cookers where the meat bed depths can be in excess of 0.60 m (2 feet)in length. In order to achieve such performance, it is necessary that the drain opening area is available throughout the draining period. This is achieved by closing the draining openings during the early phases of the cooking step so as to prevent plugging and contamination of the openings by meat while the meat is still in a raw and pliable physical state.

Despite the relatively large cooked meat bed depth found in industrial cookers, the draining method of preferred embodiments of the present invention requires a surprisingly small open draining flow area to permit a relatively rapid separation of the liquid fat and broth from the cooked meat. Thus, for example, with the openings being less than about 0.23 x 10$^{-2}$ m to 0.31 x 10$^{-2}$ m (3/32 to 1/8 of an inch) in width and the open flow area being greater than about 7.03 square meter per kg (0.1 inch squared per pound) of meat processed, it is possible to conclude in situ draining of the liquid fat and broth associated with cooked meat in a period of approximately 30 minutes or less. As a result, a particular advantage of various preferred embodiments of the present invention is that it permits current cookers to be relatively easily adapted to the manufacture of low fat ground meat.

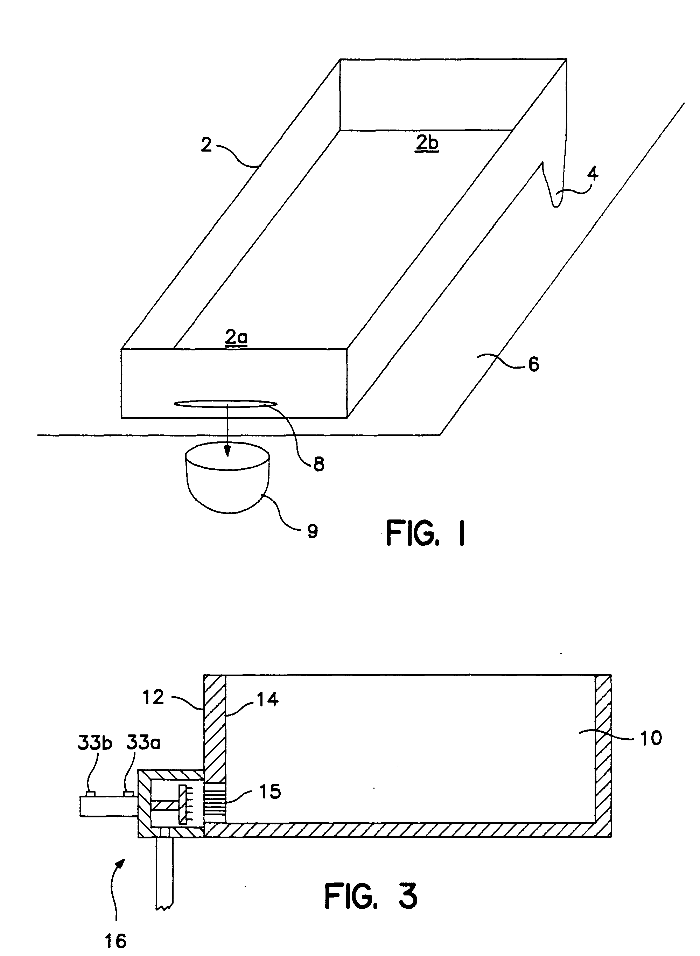

In "kitchen" scale operations, the cooking equipment may be provided with draining apparatus of relatively simple construction. For example, Figure 1 depicts a cooking and draining apparatus which may be suitable for some smaller scale (e.g., "kitchen" scale) operations. The apparatus is of relatively simple construction and comprises a pan 2 having side walls and a base, which may be made of a suitable material (e.g., metal, ceramic, glass or the like) for heating by conventional cooking devices (e.g., by placing the pan 2 over a gas or electric burner). The pan 2 is provided with one or more legs 4 arranged to allow the pan to rest on a flat surface 6 (e.g., during or after cooking), while causing the base of the pan to be angled relative to the flat surface such that one pan end 2b is lower in elevation than the opposite pan end 2a. An aperture or slit 8 is provided in the lower pan end.

In operation, a meat or meat product such as raw ground hamburger is placed into the pan 2 before cooking. The pan 2 is heated by conventional means to cook the meat. As discussed above, the cooked meat forms a liquid phase. Since the meat bed depth is small, the liquid phase easily drains from the cooked meat toward the lower pan end 2a, out the slit 8 and into a collection container 9.

Since the slit is about $0.23 \times 10^{-2}$ m (3/32 inch) in width, it is sufficiently narrow to prevent both raw and cooked meat from entering and plugging it. Further, since agitation of the meat is done manually (see Examples 1 and 2) there is insufficient force to push the pliable raw meat into the draining slit 8 (as is the case in industrial scale cookers). As a consequence, the draining slit 8 remains open during the draining period.

Although this apparatus can successfully drain fat from cooked ground meat, the apparatus design is typically limited to use with small quantities of meat, i.e., 4.5 to 9.0 kg (10 to 20 lbs) or less.

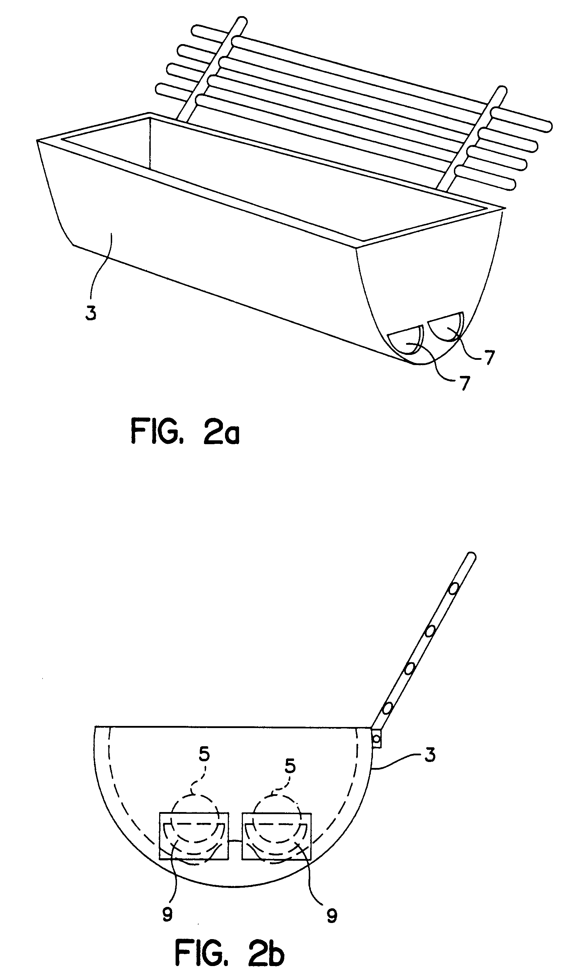

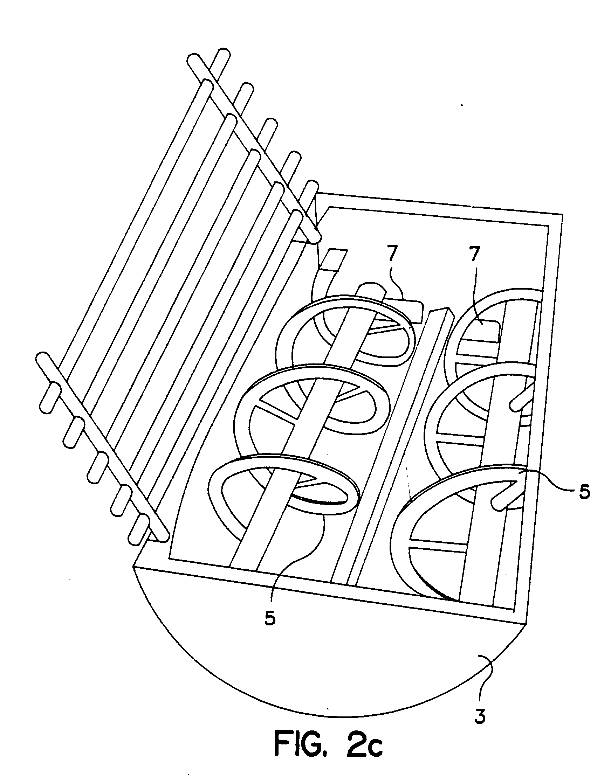

However, as discussed above, various conventional industrial meat cookers are capable of cooking relatively large volumes of ground meat, e.g., 226 kg (500 lbs) or more. Figures 2a-2c illustrate an example structure of one type of conventional industrial meat cooker. In the meat cooker of Figures 2a-2c, meat is cooked in a vat 3 which has an elongated dimension arranged generally horizontal. A safety grid cover and a domed cover (not shown) may be pivotally coupled adjacent the top of the vat. A typical cooking vat 3 is a Blentech Versatherm Model TP-28133 (manufactured by Blentech Corp. Rohnert Park, California).

Meat is placed in the vat 3 and is churned during cooking by one or more agitators or mixers which, in the illustrated apparatus, include a pair of rotary ribbon-shaped blades 5. The walls of the vat are heated to cook the meat within the vat interior. Heating may be accomplished by steam or other means (not shown) which are well known in the art.

Under normal operating procedure, once the meat is cooked, the meat is removed from the vat 3 through openings 7 in the cooking vat wall. During the cooking process, the openings 7 are covered by plate-like, hydraulically operated doors 9 (so as to inhibit the meat from passing through the apertures). The doors 9 are opened by conventional hydraulic devices (not shown) when cooked meat is to be removed from the vat 3. However, when the meat is removed from the vat, it is mixed with fat and other liquid in the meat.

Prior to the present invention, deep, large volume cooking vessels, such as the vat 3, were not particularly suited for removing fat from cooked meat as evidenced, for example by the Hunt Patent No. 3,949,659. Preferred embodiments of the instant invention addresses this problem by providing a draining system which can be readily added to existing meat cookers or for incorporating in the manufacture of meat cooking and draining systems.

Figure 3 depicts a cross section of a system according to one embodiment of the present invention. In Figure 3, the general cross-section outline of a cooking container 10 is shown. The container 10 may be, for example, a cooking vessel, such as a vat 3 of the structure shown in Figures 2a-2c or other suitable cooking vessel.

The container 10 comprises a container housing wall defining an exterior surface 12, an interior surface 14 and a pair of openings 15 (only one of which is in view in Figure 3) through the container wall. Further embodiments may have more or fewer openings of various suitable shapes and sizes. In the preferred embodiment, the container 10 holds at least one agitator or mixer.

In a preferred embodiment, a food product (such as ground meat) is placed in the container 10 and cooked. As discussed above, the cooking process produces a liquid phase in the meat such that a mixture of cooked meat, liquified fat or tallow, and broth results in the container 10. However, unlike the apparatus shown in Figures 2a-2c, the apparatus in Figure 3 further comprises a draining system for removing the liquid phase from the cooked meat.

The illustrated draining system 16 comprises two generally rectangular draining boxes 22 corresponding to two generally rectangular openings 15 in the container wall. However, other embodiments may employ other suitable numbers and sizes of draining boxes 22 and openings 15. As can be seen in Figures 3-5, each drainage box has a generally hollow interior and an end wall 23 provided with a slot array 20. The slot array 20 defines a plurality of narrow, elongated apertures 21, opening into and in flow communication with the drainage box interior. Other arrangements may employ apertures of other suitable configurations, such as round or polygonal apertures, curved or wavy shaped openings or the like. However, the openings of the apertures are to be large enough to pass liquid phase therethrough, but inhibit the passage of solid meat therethrough.

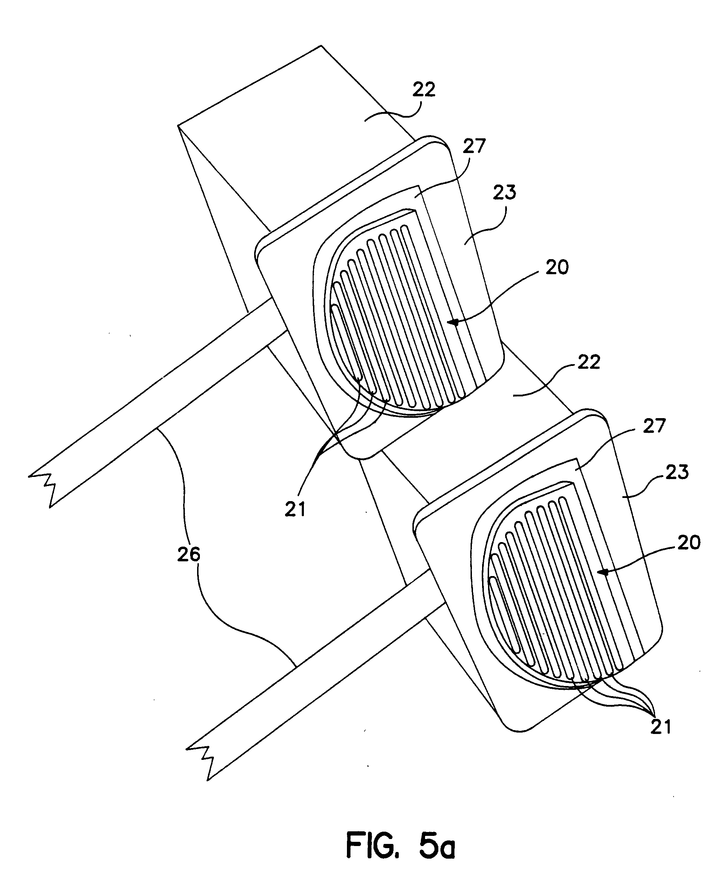

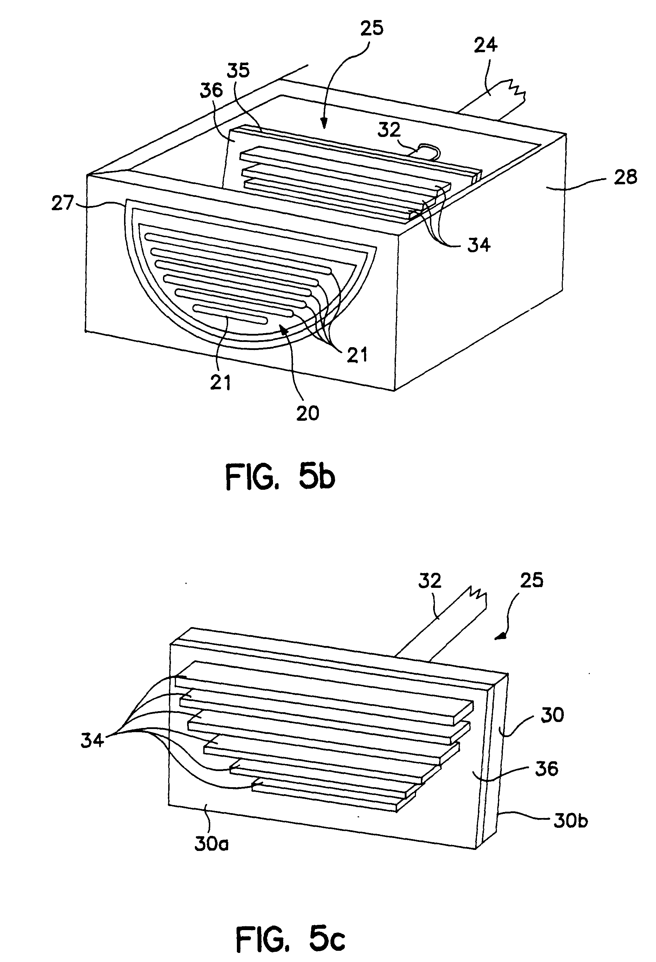

Each draining box 22 has an elongated controller element 24 which controls the position of a movable plate and arm component (generally shown at 25 in Figures 5b and 5c) disposed within the draining box. Each drainage box 22 is pivotally coupled to the exterior surface 12 of the container 10 by suitable pivotal brackets 28 and a drive mechanism (not shown). The brackets 28 and drive mechanism allow the drainage boxes 22 to pivot between closed positions (shown in Figure 4) and open positions (shown in Figure 6). In the closed position, the end wall 23 of each drainage box faces and abuts the surface 12 of the container 10 and covers an aperture 15. In the open position, the end wall 23 of each drainage box is pivoted away from the container surface 12, so as to open the otherwise covered aperture 15, e.g., to allow the cooked meat to be readily removed from the container interior.

Each drainage box 22 also has a drainage tube 26 having one end coupled in flow communication with the interior of the drainage box. The other end of each tube 26 may be coupled to a suitable liquid phase collection container or disposal system.

As discussed above, disposed within each draining box 22 is a moveable plate and arm component 25. The plate and arm component 25 comprises a plate 30 having a front surface 30a and a rear surface 30b. An arm 32 extends from the rear surface 30b of the plate 30. The plate 30 supports a plurality of elongated protrusions 34. The protrusions 34 are conured and positioned to coincide and fit within the slots in the draining slot array 20 of the associated draining box, when the plate and arm component 25 is moved into a slot closing position.

The plate and arm component 25 is mounted within an associated draining box 22 for movement between a first position (wherein the plate 30 and protrusions 34 are separated from the slot array 20 and slots 21, as shown in Figure 5b) and a second position (wherein the plate 30 is moved toward the slot array 20 such that the protrusions 34 are fitted within and substantially fill the slots 21. When in the first position, liquid may pass through the slot array 20 into the interior of the draining box. However, the size of the slot openings inhibits the passage of solid meat particulates into the interior of the draining box. When in the second position, both solid meat particulates and liquid are inhibited from passing through the slot openings.

Movement of the plate and arm component 25 is controlled by the controller element 24, which may be any suitable mechanism for selectively moving an arm (such as arm 32) in the direction of the arm axis. For example, suitable hydraulically operated mechanisms are known for providing such controlled linear movement. Thus, by way of example, Figures 3, 4, 5b and 6 show controller element 24 as a hydraulic cylinder within which the arm 32 is movably disposed. Hydraulic couplers 33a and 33b are provided for coupling to a suitable hydraulic pressure source, such that pressure supplied to coupler 33a will cause the plate and arm component 25 to move toward the first position and pressure supplied to coupler 33b will cause the plate and arm component 25 to move toward the second position. Suitable alternatives to the moveable plate and arm component and hydraulic controller include, but are not limited to, electronic/mechanical switches or a timer mechanisms controlling movable slots.

In the preferred embodiment, a seal 36 (such as a rubber gasket or the like) is disposed on the plate 30. When the plate and arm component 25 is moved into the second position, the seal 36 resides between the plate 30 and the draining slot array 20 for additional sealing functions.

The draining boxes 22 may be made from any material (including, but not limited to, ceramics, plastics, metals, such as, aluminum, copper or metal alloys such as stainless steel) that is suitable for holding liquids, including hot liquids and suitable for contacting food. Further, the draining boxes can be of various sizes and in any various quantities or locations on the container 10.

Figure 5a depicts one embodiment of draining slot arrays 20. The draining slot arrays 20 each have a plurality of slot openings 21 defining a grating. When the draining box is provided in the closed position (Figure 4) and the slots 21 are open (i.e., the plate and arm mechanism is not in the second position), the open draining slots 21 provide a liquid flow passage from the interior of the container 10 to the interior of the draining box and to the drain tube 26. A gasket 27 may be provided around each slot array 20 to improve the seal between the draining boxes 22 and the surface 12 of the container 10.

As discussed above preferably the openings defined by the slots 21 are of a size which will inhibit the passage of solid meat therethrough. It is preferable that the width W of the openings of the draining slots 20 be no greater than about $0.23 \times 10^{-2}$ m (3/32") as cooked meat particles are generally greater than $0.31 \times 10^{-2}$ m (1/8") in diameter. Also as discussed above, the draining openings can be any shape that is suitable to allow fat and broth to pass, but generally prohibit the passage of meat. The shapes of the protrusions 34 will be appropriately matched.

The fat removal apparatus according to embodiments of the present invention may be implemented by modifying existing cooking systems. For example, components can be added onto an existing cooking system, or by manufacturing cooking systems with draining features as described herein. For example, the system shown in Figures 2a-2c may be readily modified by replacing the plate-like panels 9 with pivotal draining boxes 22 as described above. As a result, minimum modifications to the structure and operating process are necessary to convert the meat cooker of Figure 2a-2c into a system for producing low fat cooked meat. However, it will be understood that further embodiments of the present invention may be employed with other types of conventional cookers to implement the desired cooking and draining system. Yet further embodiments comprise meat cookers specifically designed with draining apertures that allow liquid to pass, but do not allow cooked meat to pass and which are provided with mechanisms for selectively opening and closing such apertures.

Clearly, whereas the preferred embodiment of the current invention refers to a movable plate and arm mechanism with protrusions designed to block the draining opening at specific periods during the cooking operation, it is to be understood that alternative blocking mechanisms, such as sliding gate type plates etc. would also be effective in providing the blocking action.

The method for extracting fat according to the present invention includes the step of cooking ground meat at a temperature sufficient to cause fat in the ground meat to liquify, and a step of extracting the liquid phase from the cooked meat by draining the liquid phase from the meat through the drainage aperture (or array of apertures) which are too small to allow the passage of solid meat.

In a further embodiment, there is an additional step of adding a water absorbent and water or broth to the cooked meat such that the yield of the meat product obtained from the process is increased. Figure 7 schematically illustrates an example of the above described process. In box 38 of Figure 7, an initial volume of a food product (described herein for convenience as 100 lbs of ground meat having about 25% fat by weight) is provided. The initial volume is cooked and resulting liquid phase is drained (box 40). During cooking about 5.8 to 7.2 kg (13 to 16 lbs.) of fat and about 4.5 to 5.4 kg (10 to 12 lbs.) of broth are separated from the cooked ground meat. The cooking and removing of liquid phase provides about 29.9 kg (66 lbs) of meat having about 13% by weight of fat (box 42). In box 44, water absorbent, water or broth and flavoring are added to the 29.9 kg (66 lbs) of cooked meat. The water to flavoring/water absorbent ratio used is preferably about 3.4 kg water per kg of flavoring/water absorbent; and about 10 kg of flavoring/water absorbent is used per 100 kg of raw meat. Box 46 shows that the process produced about 185 kg (108 lbs) of cooked meat product having about 8% fat by weight.

The initial food product (box 38) used for cooking can contain any suitable percentage of fat content, including, but not limited to, up to about 30% by weight fat as allowed by the USDA. Indeed, the higher the initial fat content, the more economical the process becomes, as the cost of the raw meat used is typically less expensive the higher the fat content.

In particular, with reference to the above-described apparatus, in one preferred embodiment of the draining process, the draining slots 20 are closed during the cooking stage of the meat preparation process. Further, the meat product is agitated by mixers 16 or some other appropriate means during the cooking process to allow the meat mass to evenly cook.

At a suitable time during or after the cooking stage (for example, when the raw meat is sufficiently cooked), the draining slots 20 are opened, allowing the liquid phase produced during the cooking stage to drain by gravity through the draining slots 20. The liquid collects in the draining box 22 and then passes around and under the plate 30 and into the draining tubes 26 to an appropriate disposal or collection site.

Preferably, the separation of the liquid phase results in cooked ground meat that contains approximately 10-13% by weight fat content, which may also be about 60-75% by weight of the initial volume of raw meat. The resulting fat content is essentially the same irrespective of the percentage of fat content in the initial raw ground meat. However, in general, the higher the fat content of the starting meat, the greater the amount of fat produced in the liquid phase and the lower the yield of cooked meat illustrated in box 34 of Figure 7 (see Example 1 below).

In particular, the cooking and separation steps cause the bulk content of the initial meat to decrease such that only 60-75% by weight of the initial bulk weight of the raw ground meat remains after cooking and liquid phase separation. To increase and replace bulk content of the meat product, a water absorbent is added to the low-fat, cooked, ground meat. In one embodiment, the water absorbent is a solid, fibrous material added to the meat in a dry or semi-dry form. The water absorbent and meat are mixed with water and/or broth that have been either added to the meat mixture or remain in the mixture.

The water absorbent can be any suitable product capable of absorbing sufficient quantities of water or broth. It is preferable that the water absorbent is solid to enhance the "chunkiness" of the meat product. A "chunky" texture is preferred for certain meat products, such as meat products used as taco meat products. Further, it is preferable that the water absorbent be a natural food, such as for example, but not limited to, oat flakes, oat fiber, wheat fiber etc.

In addition to the water absorbent, a flavoring such as a taco flavoring is generally added to the meat. In one embodiment of the present invention, the addition of a water absorbent and flavoring not only flavors the meat, but increases the yield of meat to about 108% of the bulk weight of the initial meat. This results in a gain of the yield of meat product from the initial meat weight. In addition, because flavoring is added after the cooking and fat removal steps, flavoring is not lost during cooking or fat removal. Further still, the addition of water absorbent and water increases the product yield without adding fat and, thus, further diminishes the percentage of fat in the overall product. Accordingly, the addition of water absorbent can affect a further reduction in the percentage of fat in the overall meat product to about 4.5-8.0% by weight.

Due to the ability of the absorbent to absorb relatively large amounts of water relative to the unit weight of the absorbent, only a relatively small quantity of absorbent is required, for example, approximately 5% of the weight of the initial ground meat. The use of a small amount of absorbent minimizes any negative impact the water absorbent may otherwise have on product taste. Further, the use of a small amount of absorbent helps keep the cost of the process low.

Preferred embodiments of the present invention utilize the range of density differences between cooked ground meat, liquified fat and water to efficiently separate fat from meat.

It is well known that liquified fat has a lower density (approximately 0.95 gms./ml.) than water. Surprisingly, however, the density of cooked ground meat (approximately 1.07 tol.08 gms./ml.) has been found to be higher than that of pure water due to its unique composition. (See Table 2 below). This higher density can be attributed to the presence of protein (density 1.4 gms/ml.) which more than offsets the less dense fat (density 0.95 gms./ml.).

Table 2

| The approximate composition of cooked ground meat . | |
| --- | --- |
| Component | Wt.% |
| Water | 65 - 70% |
| Protein | 18 - 22% |
| Fat | 10 - 13% |

The fat separation method of the present invention capitalizes on the small but significant density differences between cooked meat, fat and water. Thus, when sufficient quantities of water (density: 1.0 gms./ml.) are added a mixture of cooked meat and fat, the cooked ground meat (density: 1.07 gms./ml.) will sink while the fat (density: 0.95 gms./ml) will float - resulting in a meat/fat separation.

According to the present invention, raw ground meat is first cooked in a cooking vessel, producing a mixture of cooked meat, liquified fat and water based broth.

Hot water is then added in sufficient quantity to the above-mentioned mixture until a liquid water layer is formed above the cooked meat level. The rendered fat rapidly separates from the mixture and floats to the water surface. On the other hand, the cooked meat sinks in the water phase. As a consequence, the water level remains above the submerged meat.

The fat particles which float to the water surface, coalesce into a generally continuous fat layer which can then be removed by suction, displacement over a weir or other means.

Accordingly, the addition of water, as disclosed by the present invention, plays two roles in enhancing fat separation: first, it provides a density difference driving force for separation, and second, by providing a liquid level above the meat to which the fat floats, it physically separates the fat from the meat.

The method of the present invention is fast and efficient. For example, about 88 lbs. of fat can be separated in 6 to 7 minutes from a cooked batch of 204 kg (450 lbs.) of raw ground meat containing ˉ25% weight fat. This represents a 79% by weight separation of the incoming fat content of the meat, yet only requires about 122 kg (270 lbs.) of water to effect the separation (see Example 1 below). It should be understood that by the use of this invention, at least about 60% by weight of the fat is caused to float above the cooked meat mixture.

The surprisingly low quantity of water required for fat separation by such method, is also a consequence of the packing characteristics of raw ground meat. Raw ground meat with a water content of about 70% has a solid density close to that of water, i.e. 1.0 to 1.08 gms/ml. ). However, experiments demonstrate (see Example 3 below) that the "packed" or bulk density of raw meat when placed in a vessel (such as a cooker) is very similar to its solid density. It is believed that, due to its soft and pliable nature, the raw ground meat packs into a bed with very few interstices.

As a consequence, when the meat cooks and the proteins denature forming small "chunks", the liquified fat and broth essentially fill the interstices formed during the cooking process.

Thus, the minimum quantity of water required to displace the fat phase above the meat level is approximately equal to the quantity of displaced fat. Due to water evaporation during cooking, and the fact that the meat level is not absolutely flat, the water quantity required for proper fat separation may be somewhat more than the minimum, but still substantially lower than the initial raw meat weight.

A method to produce cooked low fat ground meat according to a further embodiment the present invention comprises first the step of cooking ground meat in a commercial cooker to a temperature greater than about 165°F - sufficient to both cook the meat, and cause the fat in the ground meat to liquify. The liquid fat phase produced during the cooking step is then separated in situ from the meat by the addition of a small quantity of hot water, sufficient to cause the fat to both separate from and float above the meat. The separated fat is then removed by suction or other similar means.

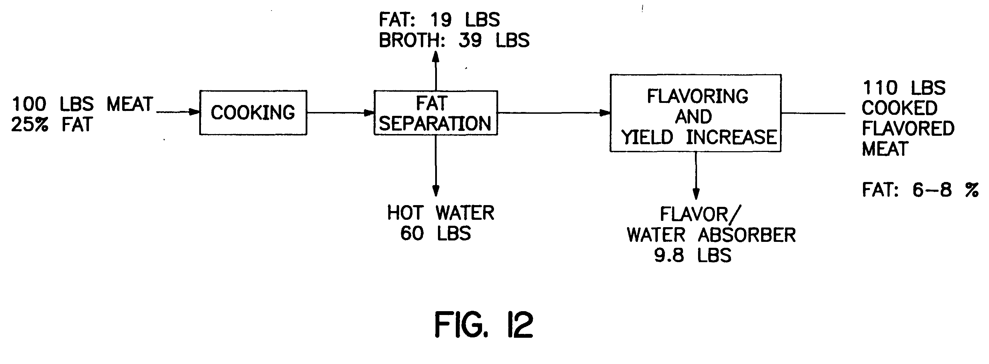

A further step of the method is to add a flavored water absorbent to the cooked meat such that the yield of the meat product obtained from the process is substantially increased. Figure 12 illustrates an example of the above described process.

In Figure 12, a quantity of a food product (described herein for convenience as 45 kg (100 lbs.) of ground meat with about 25% weight fat by weight) is cooked by a suitable cooking process. The cooking results in a mixture of cooked ground meat, liquid fat and broth. In order to separate the fat from this mixture, about 27 kg (60 lbs) of hot water is then added. The fat separation process removes essentially all the liquid fat (about 8.6 kg, namely 19 lbs) together with about 17.6 kg (39 lbs) of broth. 4.44 kg (9.8 lbs.) of water absorbent and flavoring (consisting of approximately 50% flavoring and 50% water absorbent) is then added to the meat/broth mixture and the entire meat/broth/flavoring/water absorber is agitated to thoroughly mix the various ingredients together. About 49.8 kg (110 lbs) of cooked low fat meat is produced with a fat content of between 6 to 8% fat by weight.

The initial meat used for cooking can contain almost any percentage of fat content, including, but not limited to, the maximum of 30% fat as allowed by the USDA. Indeed, the higher the initial fat content, the more economical the process becomes as the initial cost of the meat is less for meat with higher fat content.

To separate the liquid fat phase from the meat mixture, which includes the cooked meat, liquid fat and broth, requires the addition of hot water, that is, water at a temperature greater than about 82°C (180°F). Hot water is rapidly added to the meat mixture until the liquid level in the meat mixture is equal to or slightly higher than the meat level. Since the density of the cooked meat is greater than the density of both the water and the density of fat, the meat sinks in the water phase, while the fat phase having a density lighter than water, floats above the water phase.

The hot water and meat mixture is initially agitated for a short period of time to assist in the separation of the fat phase from the meat phase, and sufficient quantity of water is continued to be added until a distinct liquid fat layer is formed above the meat level.

After the predetermined quantity of hot water has been added to the meat mixture, there is a short waiting period, to permit any small fat particles to coalesce and rise into the fat layer. The majority of the fat layer is then suctioned off. The meat mixture is then briefly agitated again to release any remaining fat particles clinging to the meat and the remaining fat and broth are then suctioned off by a second set of suction tubes. Finally, the water based broth is partially removed by the third suction tubes through the screened box element that is placed below the meat surface. The remaining meat flavored broth is used for mixing with the flavoring and water absorbent mixture and is used to flavor the low fat ground meat and increase product yield.

In other embodiments, weirs or suction ports are built into the cooker. By placing the weirs or suction ports at appropriate levels, the liquid phase is separated from the meat mixture.

The separation of the liquid phase produces ground meat that contains approximately 10-13% by weight fat content, but may be aptly about 60-75% by weight of the initial volume of raw meat. The resulting fat content of the cooked meat is essentially the same irrespective of the percentage of fat content in the starting raw ground meat. The higher the fat content of the starting meat, the greater the amount of fat produced in the liquid phase and the lower the yield of cooked meat. In particular, the cooking and separation steps cause the bulk content of the initial meat to decrease such that only 60-75% by weight of the initial bulk weight of the starting raw ground meat remains after cooking and liquid phase separation.

To increase and replace bulk content of the meat product, a water absorbent is added to the low-fat, cooked, ground meat. In preferred embodiments, the water absorbent is a solid, fibrous material, added to the meat in a dry or semi-dry form. The water absorbent combines with the liquid broth (water and remaining fat) remaining in the low fat meat.

In addition to the water absorbent, a flavoring, e.g., a taco flavor, is also generally added to the meat.

The addition of a water absorbent and flavoring not only flavors the meat, but, depending on the amount added, can increase the yield of meat to about 110% of the starting bulk weight. This results in a gain of the yield of meat product from the initial uncooked meat. In addition, because flavoring is added after the cooking and fat removal steps, flavoring is not lost during cooking or fat removal. Further, the addition of water absorbent, by increasing the product yield without adding fat, further diminishes the percentage of fat in the overall product. Accordingly, the addition of water absorbent can affect a further reduction in the percentage of fat in the overall meat product to about 4.5-8% by weight.

Preferably, the water absorbent is capable of absorbing a large amount of water and/or broth per unit weight of absorbent. A preferred water absorbent is one which is capable of absorbing at least 2.7-3.4 kg (6-7.5 lbs) water per lb of absorbent.

Due to the ability of the absorbent to absorb large amounts of water relative to the unit weight of the absorbent, only a small quantity of absorbent is required, for example, approximately 5% by weight of the weight of the raw ground meat. The use of a small amount of absorbent minimizes any negative impact the water absorbent may otherwise have on product taste. Further, the use of a small amount of absorbent minimizes the cost of the process.

The water absorbent can be any suitable product capable of absorbing large quantities of water or broth relative to its weight. It is preferable that the water absorbent is solid to enhance the "chunkiness" of the meat product. A "chunky" texture is preferred for certain meat products, such as meat products used as taco meat products. Further, it is preferable that the water absorbent be a natural food, such as for example, but not limited to, oat flakes, oat fiber, wheat fiber, cereals etc.

A further apparatus according to an embodiment of the present invention relates to an apparatus that can be used ( in situ, if desired ) in industrial scale cookers for fat separation from cooked meat products.

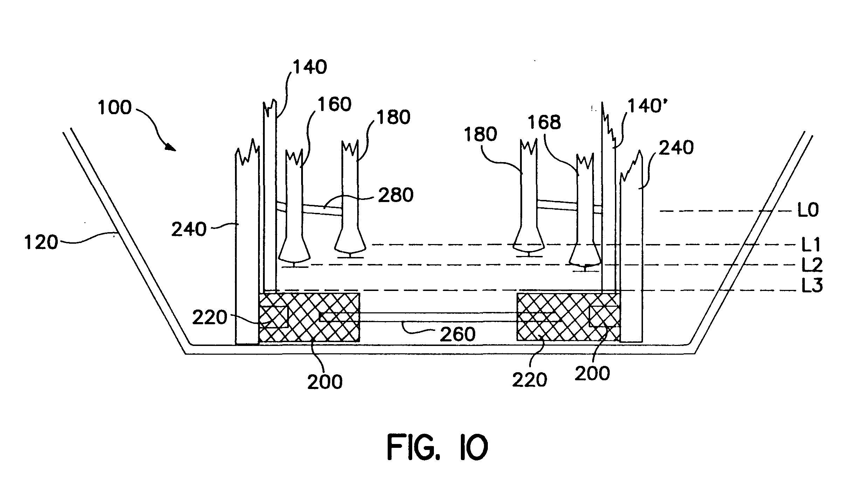

Referring to Figure 10, the fat separation apparatus 100 is shown within the general outline of a container 120. The container 120 may be, for example, a cooking vessel for holding a food product (such as ground meat). In other embodiments, the container 120 may simply be any suitable vessel for holding food products (not necessarily a cooking vessel). A preferred embodiment for container 120 is a Blentech VersaTherm blender cooker.

The apparatus 100 includes a set of hollow suction tubes 140, 160 and 180, each coupled to a suction source (not shown). Tube 140 opens at its lower end into a box-like structure 200 having a hollow interior and at least one screen-mesh wall 220. The box-like structure 200 is located below a first selected level L3. Tube 160 opens at its lower end just below a second selected level L2 above L3, and tube 180 opens at its lower end just below a third selected level L1 located above L2 and L3.

A second set of hollow suction tubes 140, 160 and 180 and a box-like structure 200 with screened wall 220, respectively, are also shown in Figure 10, and are similar in structure and function as tubes 140, 160, 180 and structure 200. Finally, the apparatus 40 includes two water feed tubes 240 and 240', through which water can be fed directly into the container .

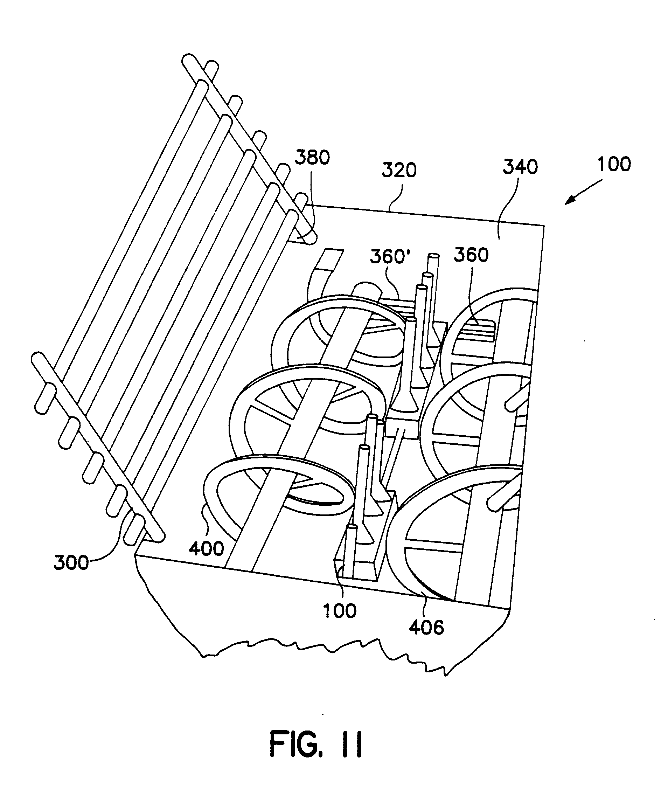

It will be understood that other embodiments of the invention may employ other number of sets of tubes. The tubes and box-like structures are coupled together by suitable brackets 260, 280 and 280'. In one preferred embodiment, the entire apparatus 100 is coupled to a mechanical lift for lowering the apparatus into the container 120 and for lifting the apparatus out of container 120. Alternatively, the apparatus 100 may be moved as individual components or as a whole, mechanically or manually, or may be fixed in place on a safety grid 300, as shown in Figure 11.

When container 100 is designed as a cooker, as shown in Figure 11, the main body element 320 further defines a main cavity 340 in which meat (not shown) is placed for processing. In such configuration, container 100 contains drainage doors 360 for emptying the container 100 after processing has been completed. The main cavity 340 of container 100 is frequently covered with safety grid 300 and pivot connections 380 and a solid lid (not shown) to enclose the meat within the main cavity 340 so as to permit cooking under sanitary conditions. Generally the outer wall surfaces of the main cavity 340 are jacketed, and steam or other heating media is passed through the jacket in order to heat the outer wall surfaces, thus supplying the heat necessary for cooking. The quantity of energy supplied to the outer jacket is generally controlled automatically based on bulk temperature measurements of the meat made by a thermocouple passing through a surface wall of the container 100 and placed into the cooking meat mass.

Horizontal motor driven blending agitators 400 and 400' continuously move the meat from the center of the cooker to the outer heated walls during the cooking operation.

In a preferred embodiment, the lid and safety grid 300 are first opened (i. e. placed in a vertical position) and raw meat is placed within container 100 with the blender agitators moving at slow speed to uniformly disperse the meat throughout the main cavity 340. The safety grid and lid are then closed and energy is applied to the heating jacket so as to cook the meat within the cooker. During the cooking period the meat is agitated and blended (by 400 and 400' ) until the meat reaches a predetermined temperature (generally greater than 73°C, namely 165°F). At the end of the cooking cycle, the lid and safety grid of the cooker are opened, and the apparatus 100 (of the type shown in side view in Figure 10) is attached to the underside of the safety grid 300 which is then returned to its original horizontal position, thereby fixing and lowering apparatus 100 into the main cavity element 340. The desired level of apparatus 100 is such that the meat/fat/broth mixture reaches approximately between level L2 and L3 as shown in Figure 10. The apparatus 100 is preferably located equidistant and adjacent to each of the horizontal agitator ribbons 400 and 400', as shown in Figure 11. For ease of description, however, Figure 11 does not show the safety grid in its horizontal position holding the apparatus 100 in the position defined above.

Hot water is then added to the meat/fat/broth mixture through tubes 240 and 240' until the liquid level of fat (which has already partly separated and floated to the water surface) reaches level L0 (a level which is above L1, L2 and L3).

Due to a density driving force, as discussed above, the fat rapidly separates from the cooked meat and coalesces (over a period of 1 to 2 minutes) into a generally continuous layer floating on top of the meat. The first suction tubes 180 and 180'disposed just below level L1 (below the top of the meat level) are then used to extract the majority of the fat that has separated from the meat.

After further agitation of the meat/fat/broth mixture and a brief (e.g., 10 seconds) coalescing time, the remainder of the separated fat together with some broth is sucked out through tubes 160 and 160', whose ends reside at level L2 which is just above the top of the meat level.

The third set of suction tubes 140 and 140' extracts excess water and broth from below the meat surface which is located between levels L2 and L3. To inhibit meat from being suctioned out of the vessel, the third set of suction tubes 140 and 140' extracts the water/broth from the screened box element 200 and 200' which are located within the main meat mass. The screened box elements 200 and 200' allow water/broth to enter the box, through screens 220, 220', but inhibits meat from entering as the screen mesh is small enough such that meat is prevented from passing into the screened box elements 200 and 200'.

Upon completion of the fat separation process, apparatus 100 is removed from the main body element 340 (by lifting the safety grid 300 into the vertical -open- position and then removing the apparatus 100 from the grid) prior to addition of any flavorings or water absorbents.

Example 1

The meat employed in this example was ground beef having an initial weight of 205 kg (453 lbs) and an initial fat concentration of approximately 25% by weight. The initial fat concentration was determined by standard laboratory analysis procedures.

A Blentech Model 1548 VersaTherm blending cooker was utilized in this example. The safety grid and lid of the cooker were opened (i.e. moved from the closed horizontal position to a vertical open position) and the above-mentioned meat was placed within the cooking vessel while the blender agitators were operating in slow motion to distribute the meat evenly throughout the cooker. The safety grid and lid were then returned to the closed horizontal position thereby enclosing the meat within the VersaTherm cooker, and the blender agitators increased in speed for the cooking step.

Steam having a pressure of about 25,311 kg/m$^2$ (36 psi) was used as the heating medium for cooking. The moment the blender agitators were activated (during addition of the meat to the cooker) steam started to flow into the heating jacket of the cooker, and the steam flow to the jacket was automatically controlled throughout the entire cooking process based upon continuous thermocouple temperature measurements of the meat being cooked within the cooker.

The cooking step was automatically terminated (by shutting off the steam to the heating jacket) when the meat temperature reached 73°C (165°F) to 76°C (170°F). The meat temperature was confirmed manually by using a long stem dial thermometer to measure the temperature at several locations in the meat mixture.

The lid and safety grid of the Blentech cooker was then opened (i.e. placed in a vertical position) and fat separation apparatus 100 (of type shown in figure 10) was manually attached to the safety grid 300, so that upon relocating the grid to its original horizontal position, the fat separation apparatus rested between and adjacent to the two ribbon agitators, and at the correct depth within the meat mixture.

Flexible hoses were attached to tubes 240 and 240' and 122 kg (270 lbs.) of water at 85°C (185 degrees F) were pumped into the meat mixture over a period of about 2 minutes. The meat was agitated for the initial 20 to 30 seconds of the water addition, to assist in the separation of the fat particles from the meat.

After the hot water had been added, there was a waiting period of approximately 1.5 minutes to permit separation of any water from the fat globules and to allow coalescence of the fat globules into a continuous fat layer.

During this waiting period, hoses were attached to suction tubes 180 and 180' and at the termination of the waiting period, the initial separated fat layer was suctioned out of the cooker.

The meat mixture was once again agitated for a short period of 10 seconds, and after changing suction hoses, any remaining fat and broth layer was removed from the cooker through suction tubes 160 and 160'

Finally, the hoses were attached to the screened suction tubes 140 and 140', and after a further 10 second agitation, approximately half of the remaining broth in the meat mixture was suctioned off.

The fat separation process removed 39.8 kg (87.8 lbs.) of fat and 79.8 kg (176 lb.) of broth from the meat mixture, and was completed in 6 to 7 minutes.

The fat separation apparatus was then manually removed from the cooker, and approximately 20.4 kg (45 lbs.) of seasoning/water absorption mixture was added to the remaining meat/broth mixture in approximately four equal portions. In this example, a "taco" flavoring was used and the water absorber was a mixture of oat flakes and oat fiber. The ribbon agitators 400, 400' were used to disperse and thoroughly mix the seasoning/water absorbents with the meat and broth in the cooker.

Upon completion of the thorough mixing, the entire meat/seasoning mixture was reheated to a temperature of 73°C (165°F) to 76°C (170°F). The meat was then removed through ports 380, 380'.

This particular experimental run produced 225 kg (498 lbs.) of cooked seasoned low fat ground meat having a fat content of 7.4 %.

The present invention allows the use of meats with a variety of initial fat contents, including relatively high-fat meat with a relatively high initial percentage of fat, such as 25-30% by weight, to produce generally low-fat meat products (4.5-8.0% by weight of fat). Further, combining a fat separation step with a flavoring or yield enhancing step produces relatively high yields of relatively low-fat meat products. In the preferred embodiment, a small amount of natural food absorbing material is used to absorb significant quantities of water, yet maintain a "chunky" meat-like texture.

For purposes of illustrating various principals and features of the invention, the following Examples are described below, but are not intended to limit the scope of the invention.

Example 2

Experiments were undertaken determine the fat content and yield of cooked ground meat remaining after efficient removal of the liquid phase produced during cooking by the method and apparatus of this invention.

The meat for these experiments was cooked in an open aluminum pan approximately 43.18 x 10$^{-2}$ m (17 inches) wide by 50.8 x 10$^{-2}$ m (20 inches) long, constructed with approximately 10.16 x 10$^{-2}$ m (4 inch) high side walls surrounding the entire flat pan surface (similar to the one shown in Figure 1).

A 0.23 x 10$^{-2}$ m (3/32 inch) wide slit approximately 20.32 x 10$^{-2}$ m (8 inches) long was machined along the lower front edge of the pan at the intersection of the flat pan surface and the front side wall surface. The total open flow area of the slit was therefore 4.83 x 10$^{-4}$ m$^2$ (0.75 inches squared).

A small collection trough was attached to the underside of the pan in the location of the slit. This trough was designed to collect the liquid passing out of the pan through the above-mentioned slit, and to convey the exiting liquid through a flexible tube to an external collection vessel where the volume of exiting liquid could be measured.

The modified cooking pan was placed on a commercial gas-fired kitchen stove and the edge of the pan opposite from the slit was elevated above the level of the slit edge. In this manner, liquid fat and broth produced during the cooking of ground meat in the pan flowed toward the slit opening and.exit the pan thereby being separated from the cooking meat. Prior experiments had demonstrated that a 0.23 x 10$^{-2}$ m (3/32 inch) slit was sufficiently small to prevent plugging by raw or cooked meat particles, but sufficiently large not to impede the flow of liquid through the slit.

Several experiments, using ground meat of different fat content, were performed using this cooking pan and liquid separation device. In all cases, approximately 10 lbs. of ground meat was placed in the pan and cooked on the gas flame stove, with continuous manual agitation by a rake-like device to assure uniform cooking.

A 4.5 kg (10 lb.) batch of meat generally took approximately 15 minutes to cook to a temperature greater than 73°C (165°F). After about 7 to 8 minutes into the cooking cycle, liquid broth and fat started to drain out through the slit and was continuously collected in the measuring vessel. Liquid fat and broth continued to drain from the meat for an additional approximately 3 minutes, even after the cooking process was terminated.

Once the liquid essentially stopped draining from the pan, the volume of fat (which floated on the broth) and the volume of broth were noted.

TABLE 3

| RUN NO. | RAW MEAT | | DRAINED LIQUID | | COOKED MEAT | | |
|---|---|---|---|---|---|---|---|
| | STARTING WT. GMS | % FAT | FAT MI | BROTH MI | YIELD %* | % FAT | GMS FAT PER 100 GMS OF RAW MEAT USED IN COOKING* |
| 1. | 4550 | 24.24 | 775 | 465 | 65 | 12.28 | 7.98 |
| 2. | 4562 | 20.0 | 667 | 577 | 67 | 12.06 | 8.09 |
| 3. | 4559 | 13.21 | 215 | 635 | 73 | 10.14 | 7.39 |
| 4. | 4562 | 11.19 | 145 | 590 | 76 | 11.08 | 8.39 |

SUMMARY OF FAT SEPARATION STUDIES UTILIZING GROUND MEAT WITH DIFFERENT FAT CONTENTS

\* % Yield = [Cooked meat weight after draining/starting raw meat weight] x 100

\*\* gms fat/100 gm starting raw meat used in cooking = $\frac{\text{\% Yield x Cooked Meat \% fat}}{100}$

Table 3 presents the results of four fat separation experimental runs using raw meats of different starting percent fat content. For each experimental run, Table 3 indicates the initial weight and fat content of the raw meat used. The Table then summarizes the quantity of fat and broth drained from the cooked meat and the yield and fat content of the cooked meat produced in each of the particular experimental runs. The grams of fat remaining in the cooked meat per 100 grams of raw meat cooked was then derived from the cooked meat yield and fat content.

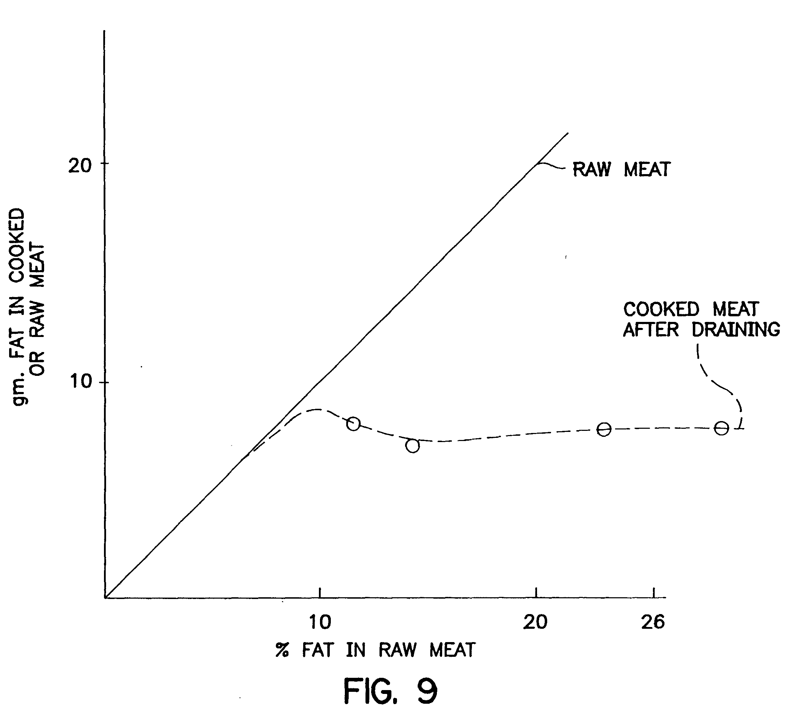

Figures 8 and 9 present the data of Table 3 in graphical form. Figure 8 is a plot of cooked meat yield vs. percent initial percent fat in the starting raw meat. For each different starting raw meat, Figure 8 also presents the final cooked and drained meat percent fat content.

Figure 9 plots the fat content (in grams of fat) for either raw meat or cooked meat after liquid separation against the percent fat in the raw meat used to produce the cooked and drained meat.

From these experiments one can see that:

1. Low fat ground meat (with a fat % ranging from 10% by weight to 12% by weight) can be produced from almost any percent fat starting raw ground meat, provided that the rendered fat can be separated from the cooked mixture. (Figure 8)

2. The low fat ground meat remaining after separation of the liquid phase contains about 8 gms. of fat for every 100 gms of raw ground meat cooked, irrespective of the fat percent of the raw meat. (Figure 9)

3. The yield of low fat ground meat remaining after separation of the liquid ranges from 65% to75%, and is lower the higher the fat content of starting raw meat. (Figure 8)

Example 3

Raw ground beef having an initial weight of 4540 grams and an initial fat concentration of approximately 25% by weight was selected as a starting (or initial) ingredient. The raw meat was placed in a cooking pan with draining slot of the type as described with reference to Figure 1. The meat was cooked over a gas flame stove for 14 minutes, at which time the cooked meat had reached a temperature in excess of 76°C (170 degrees F), as measured by an electronic thermometer.

After about 5 to 7 minutes, a liquid phase of fat and broth started exiting from the pan through the slot. This liquid was collected for an additional 3 minutes after the gas cooking flame had been extinguished. A total of 635 ml. of fat and 540 ml. of water based broth were collected from the draining system.

It was determined that a 0.23 x 10$^{-2}$ m (3/32 inch) slot representing a draining open area of 5.27 square meter per kg (0.075 inches squared per pound) of raw meat processed permits continuous and rapid draining of "kitchen scale" cookers.

A seasoning/water absorber mixture was prepared for addition to the cooked and drained meat. In order to prepare the seasoning/water absorber, 457 gms. of seasoning/water absorber was mixed with 1550 gms. of room temperature water to produce a liquidy paste. Here, the seasoning was a "taco" flavor and the water absorber was a mixture of oat flakes and oat fiber. This "paste" was added slowly to the low fat ground meat in the cooking pan while continuously mixing the cooked ground meat/paste mixture over a reduced heat gas flame until the temperature of the entire mixture once again exceeded 76°C (170°F). During this mixing/heating period, the meat was seasoned and the water absorbent absorbed the excess water and was distributed throughout the meat.

As a result, 4977 gms of flavored meat having a fat content of 7.25% by weight fat was produced. This represents a 109.6% yield (based on starting raw meat weight).

Example 4

The discharge doors on a Blentech Model 1548 VersaTherm blending cooker (similar in construction to the cooker shown in Figures 2a-2c) were modified and fitted with a slotted draining system with slot "plugs" (similar in construction to the draining box system described above with reference to Figures 3-6) according to the present invention. The total open flow area of the slots in the above-mentioned system was approximately 16 inches squared.

The discharge doors and slots were closed and 206.3 kg (455 lbs) of ground beef having initial fat concentration of approximately 25% by weight was loaded into the cooker.

The meat was cooked conventionally with continual agitation by blending agitators utilizing 25,311 kg/m$^2$ (36 psi) steam as the heating medium. The cooking step was terminated when the meat temperature reached 73°C (165°F) to 76°C (170°F), as measured manually by a long stem dial thermometer at several locations in the meat mixture.

With the blending agitators continuing to maintain the meat in a mixed state, the slot "plugs" were opened pneumatically and the fat/broth mixture allowed to drain out over a period of time. After 12 minutes of draining time, 60 liters of liquid (representing 72% of the total liquid volume that eventually drained) had already drained from the cooker. This liquid contained approximately 33 liters of fat.

As the liquid level in the meat mixture dropped, so did the rate of draining, so that a total of 35 minutes was required to drain essentially the entire liquid content of the meat bed. A total of 81 liters of liquid containing about 36 to 38 liters of fat was collected. Analysis of the remaining ground meat showed that it had a fat content of 13.87% by weight.

As indicated above, agitation of the meat bed was continued throughout the draining step. This was done to minimize compaction of the meat bed in the vicinity of the drainage slots, in order to ease the drainage rate through the meat bed. However, it was recognized that continued agitation during the draining phase tended to maintain the liquid/ground meat mixed which reduced the rate of draining. Consequently, a further experiment was undertaken in which the agitators were stopped shortly after the drainage "plugs" were opened, so as to assess the relative advantage of agitation during the draining process.

In preparation for a second experimental run, the drainage slots were closed and 205 kg (453 lbs) of the same meat as the previous run were placed and cooked'in the Blentech cooker, according to the earlier procedure.

At the end of the cooking cycle, the slots were opened, and the agitators stopped. The entire draining process then proceeded without any agitation of the meat mixture. At the end of 12 minutes, 73 liters of liquid had drained from the meat (containing approximately 34 liters of fat) and once again, draining needed to continue for a total period of approximately 30 minutes during which a total of 26 liters of liquid drained out containing about 39 liters of fat. Both approaches were within the scope of the present invention.

Thus, under industrial conditions, a surprisingly small slot flow area of about 2.1 square meter per kg (0.03 inches squared per pound) of meat processed is sufficient to permit the liquid draining to be completed in about 30 minutes. Clearly, this draining time could be even further reduced, according to further embodiments, with additional draining systems installed at strategic locations along the bottom of the cooker (to provide additional drain flow area and to minimize the distance the liquid needs to flow to reach a drainage open area).

In a third experimental run, the drainage slots were left open. About 204 kg (450 lbs.) of similar meat to the previous runs were then cooked in the Blentech cooker, according to procedures described earlier.

Within a few minutes of commencing the cooking cycle a liquid mixture of liquified fat and broth started to exit the cooker through the open slots. However, the exiting liquid was mixed with raw meat which also contaminated and partially filled the open slots. Only about 10 liters of liquid was collected during the period in which the meat temperature increased to about 73°C (165°F). Once the meat temperature exceeded about 73°C (165°F), then the liquid flow rate increased and similar quantities of fat and broth were collected as indicated in the above two experiments. Red raw meat remained' in the slots throughout the entire cooking and draining process both blocking and contaminating the slots. Since this raw meat was then in direct contact with the cooked meat in the cooker, it formed an unacceptable microbiological contamination risk, and as such precluded this operating approach. Further, during the period when the meat temperature was less than about 73°C (165°F), raw meat passed out of the cooker through the slots resulting in a further loss of meat.

Thus, it is possible to separate liquid fat from a cooking vessel containing a cooked meat/liquid mixture, provided drainage openings can be located on the lower walls of the cooking vessel, and the openings can be prevented from plugging and becoming contaminated with meat (raw or cooked). Agitation in beds that are less than 0.3 to 0.6 m (1 to 2 ft) in depth is not essential but may be beneficial in deeper beds.

Example 5

The meat employed in this example was ground beef having an initial weight of 586 gms. and an initial fat concentration of approximately 25% by weight.

The meat was cooked in a standard kitchen electrically heated skillet (manufactured by Westbend) set at 265 degrees F for period of 5 to 5.5 minutes.

The entire cooked meat/liquified fat/broth mixture was then rapidly transferred to a large funnel, in the neck of which was placed a small screen (screen hole size of approximately 0.079 m by 0.079 m, namely 1/32 inch by 1/32 inch). The screen restrained the meat particles, but allowed the liquified fat and broth to drain from the meat and be collected in a measuring cylinder placed below the'outlet of the funnel.

After all the liquid had stopped draining from the meat, 98 ml. of fat and 50 ml. of broth were collected in the measuring cylinder, leaving 398 gms of cooked and drained meat.

The "packed" bed density of the cooked and drained meat was then measured by placing 300 gms. of cooked meat in a beaker. The meat occupied 450 to 460 ml., resulting in a packed density of 0.66 gms./ml. This is in contrast to the solid density of cooked and drained meat which is 1.07 gms./ml. (as discussed earlier).

The "free or open" volume of a packed bed of 398 gms. of cooked, drained ground meat is therefore:

$$398 \times [\, 1 / 0.66 - 1 / 1.07 \,] = 225 \text{ ml.}$$

The volume of liquid separated (148 ml.) and evaporated (approx. 586 - [398+148]) is 188 ml.

Thus it can be confirmed that the "free" volume produced during cooking of ground meat is essentially filled by liquified fat and broth, provided water evaporation is kept to a minimum.

Although the foregoing describes preferred embodiments of the invention, the foregoing description is not intended to limit the invention. Rather, the foregoing is intended to cover all modifications and alternative constructions falling within the scope of the invention as expressed in the appended claims.

**Claims**

**1.** A system for removing fat and excess liquids from a cooked meat product, comprising:

a cooking vessel (120);
a plurality of suction tubes (140, 160, 180) disposed at various predetermined levels in said vessel (120), wherein at least one of the tubes (140, 160, 180) is adapted to be disposed above the level of the meat after cooking; and
means for adding water to the vessel (120).

2. The system claimed in claim 1 wherein the suction tubes (140, 160, 180) are removably disposed in the vessel (120).

3. The system as claimed in claim 1 further comprising a porous box (200) adapted to be disposed in the vessel (120) below the level of the meat, and wherein at least one suction tube (140) extends into said box (200).

4. The system as claimed in claim 3 where the box (200) is configured to prevent meat particles from passing into the box (200).

5. The system as claimed in claim 3 where the plurality of suction tubes (140, 160, 180) comprises:

a first suction tube;
a second suction tube; and
a third suction tube,

each said tube being disposed at different levels in the vessel (120).

6. The system as claimed in claim 5 where said third suction tube is positioned in said vessel (120) so as to extend into said box (200).

7. A fat extraction system for removing liquified fat and other liquids from a cooked meat product comprising:

(a) a cooking vessel having mixing blades (400) disposed therein, means for cooking the meat joined to the vessel, and a port (300) for removing the cooked meat product;
(b) a fat removal apparatus (100) selectively joined to said vessel, said apparatus having a series of tubes such that when the apparatus (100) is disposed in the cooking vessel, at least one tube is adapted to be disposed above the level of cooked meat and at least one tube is adapted to be disposed below the level of the cooked meat, and
(c) means for adding water to the vessel.

8. The system according to claim 7 further including a porous box (200) adapted to be disposed below the cooked meat level and at least one tube disposed in said box (200).

9. A method for extracting fat from a meat mixture employing an extracting apparatus, comprising the steps of:

(a) cooking the meat mixture so as to form a generally crumby cooked meat mixture including liquified fat and broth;
(b) adding sufficient water at a temperature greater than about 82 °C (180 °F) to the meat mixture so as to cause the fat in the meat to float above the cooked mixture;
(c) agitating the meat mixture;
(d) permitting the liquified fat to float above the meat mixture in a defined fat layer;
(e) suctioning off the fat layer by a first suction tube;
(f) agitating the meat mixture to release any remaining liquified fat;
(g) suctioning off any remaining liquid fat and broth employing a second suction tube located at a position lower than the first suction tube; and
(h) suctioning off remaining water and broth through a third suction tube located at a position lower than the second suction tube.

10. The method according to claim 9, further comprising the step of:

(i) adding a water absorbent compound to the meat mixture produced in step (h).

**EP 0 781 108 B1**

11. The method according to claim 10, wherein the water absorbent compound is selected from the group consisting of oat flakes, oat fibers, wheat fibers and cereals, and mixtures thereof.

12. The method according to claim 10 or 11, wherein a flavoring agent in added in step (i).

13. The method according to claim 12, wherein the flavoring agent is a taco flavor.

14. The method according to any of claims 9 to 13, wherein sufficient water is added to cause at least 60% by weight of the fat in the raw meat to float above the meat mixture.

**Patentansprüche**

1. System zum Entziehen von Fett und anderen überschüssigen Flüssigkeiten aus einem gekochten Fleischprodukt, wobei das System folgendes umfasst:

   ein Kochgefäß (120);
   eine Mehrzahl von Saugrohren (140, 160, 180), die auf verschiedenen vorbestimmten Ebenen in dem genannten Gefäß (120) angeordnet sind, wobei mindestens eines der Rohre (140, 160, 180) oberhalb der Ebene des Fleisches nach dem Kochen angeordnet werden kann; und
   eine Einrichtung zum Hinzufügen von Wasser in das Gefäß (120).

2. System nach Anspruch 1, wobei die Saugrohre(140, 160, 180) entfernbar in dem genannten Gefäß (120) angeordnet sind.

3. System nach Anspruch 1, wobei das System ferner einen löcherigen Kasten (200) aufweist, der in dem Gefäß (120) unterhalb der Ebene des Fleisches angeordnet werden kann, und wobei sich mindestens ein Saugrohr (140) in den genannten Kasten (200) erstreckt.

4. System nach Anspruch 3, wobei der Kasten (200) so konfiguriert ist, dass er es verhindert, dass Fleischpartikel in den Kasten (200) eindringen.

5. System nach Anspruch 3, wobei die Mehrzahl von Saugrohren (140, 160, 180) folgendes umfasst:

   ein erstes Saugrohr;
   ein zweites Saugrohr; und
   ein drittes Saugrohr,

   wobei die genannten Rohre auf unterschiedlichen Ebenen in dem Gefäß (120) angeordnet sind.

6. System nach Anspruch 5, wobei das genannte dritte Saugrohr in dem genannten Gefäß (120) derart positioniert ist, dass es sich in den genannten Kasten (200) erstreckt.

7. Fettentzugssystem zum Entziehen von Fett in flüssiger Form und anderen Flüssigkeiten aus einem gekochten Fleischprodukt, wobei das System folgendes umfasst:

   (a) ein Kochgefäß mit darin angeordneten Mischerschaufeln (400); eine mit dem Gefäß verbundene Einrichtung zum Kochen des Fleisches; und eine Öffnung (300) zum Entnehmen des gekochten Fleischproduktes;
   (b) Entfettungsvorrichtung (100), die selektiv mit dem genannten Gefäß verbunden wird, wobei die genannte Vorrichtung eine Reihe von Rohren aufweist, so dass, wenn sich die Vorrichtung (100) in dem Kochgefäß befindet, mindestens ein Rohr oberhalb der Ebene des gekochten Fleisches angeordnet werden kann, und wobei mindestens ein Rohr unterhalb der Ebene des gekochten Fleisches angeordnet werden kann; und
   (c) eine Einrichtung zum Hinzufügen von Wasser in das Gefäß.

8. System nach Anspruch 7, wobei das System ferner einen löcherigen Kasten (200) aufweist, der unterhalb der Ebene des gekochten Fleisches angeordnet werden kann, und wobei mindestens ein Rohr in dem genannten Kasten (200) angeordnet ist.

17

**9.** Verfahren zum Entziehen von Fett aus einer Fleischmischung unter Verwendung einer Entzugsvorrichtung, wobei das Verfahren die folgenden Schritte umfasst:

(a) Kochen der Fleischmischung, so dass eine allgemein krümelig gekochte Fleischmischung mit Fett in flüssiger Form und Brühe erzeugt wird;
(b) Hinzufügen von ausreichend Wasser bei einer Temperatur von über etwa 82°C (180°F) zu der Fleischmischung, um zu bewirken, dass das Fett in dem Fleisch über der kochenden Mischung schwimmt;
(c) Aufrühren der Fleischmischung;
(d) das Fett in flüssiger Form oberhalb der Fleischmischung in einer definierten Fettschicht schwimmen lassen;
(e) Absaugen der Fettschicht durch ein erstes Saugrohr;
(f) Aufrühren der Fleischmischung zum Freisetzen von etwaig verbleibendem Fett in flüssiger Form;
(g) Absaugen von etwaig verbleibendem flüssigen Fett und Brühe unter Verwendung eines zweiten Saugrohres, das an einer Position unterhalb des ersten Saugrohres angeordnet ist; und
(h) Absaugen von verbleibendem Wasser und Brühe durch ein drittes Saugrohr, das an einer Position unterhalb des zweiten Saugrohres angeordnet ist.

**10.** Verfahren nach Anspruch 9, wobei das Verfahren ferner den folgenden Schritt umfasst:

(i) Hinzufügen einer wasseraufnehmenden Zusammensetzung zu der in dem Schritt (h) erzeugten Fleischmischung.

**11.** Verfahren nach Anspruch 10, wobei die wasseraufnehmende Zusammensetzung aus der Gruppe ausgewählt wird, die folgendes umfasst: Haferflocken, Haferballaststoffe, Weizenballaststoffe, Getreideflocken und Mischungen dieser.

**12.** Verfahren nach Anspruch 10 oder 11, wobei in dem Schritt (i) ein Geschmacksstoff hinzugefügt wird.

**13.** Verfahren nach Anspruch 12, wobei es sich bei dem Geschmacksstoff um einen Taco-Geschmacksstoff handelt.

**14.** Verfahren nach einem der Ansprüche 9 bis 13, wobei ausreichend Wasser hinzugefügt wird, um zu bewirken, dass mindestens 60 Gewichtsprozent des Fetts in dem rohen Fleisch oberhalb der Fleischmischung schwimmt.

**Revendications**

**1.** Système pour éliminer les matières grasses et les liquides en excès de viandes cuites, comprenant :

un récipient de cuisson (120) ;
une pluralité de tubes d'aspiration (140, 160, 180) disposés à divers niveaux prédéterminés dans le dit récipient (120), de sorte qu'au moins un des tubes (140, 160, 180) peut être placé au-dessus du niveau de la viande après cuisson ; et
un moyen d'addition d'eau au récipient (120).

**2.** Système selon la revendication 1, dans lequel les tubes d'aspiration (140, 160, 180) sont disposés de façon amovible dans le récipient (120).

**3.** Système selon la revendication 1, comprenant en outre une boîte poreuse (200) prévue pour être disposée dans le récipient (120), au-dessous du niveau de la viande, et dans lequel au moins un tube d'aspiration (140) s'étend à l'intérieur de la dite boîte (200).

**4.** Système selon la revendication 3, dans lequel la boîte (200) est configurée de manière à empêcher les particules de viande de passer dans la boîte (200).

**5.** Système selon la revendication 3, dans lequel la pluralité de tubes d'aspiration (140, 160, 180), comprend :

un premier tube d'aspiration ;
un deuxième tube d'aspiration ; et
un troisième tube d'aspiration ;

chaque dit tube étant disposé à un niveau différent dans le récipient (120).

6. Système selon la revendication 5, dans lequel le dit troisième tube d'aspiration est placé dans le dit récipient (120) de façon à s'étendre à l'intérieur de la dite boîte (200).

7. Système d'extraction de graisse pour éliminer les matières grasses liquéfiées et d'autres liquides de viandes cuites, comprenant :

   (a) un récipient de cuisson dans lequel sont disposées des lames de mélange (400), un moyen de cuisson de la viande associé au récipient, et un orifice (300) pour retirer la viande cuite ;
   (b) un appareil d'extraction des matières grasses (100) sélectivement relié au dit récipient, le dit appareil comportant une série de tubes de sorte que, lorsque l'appareil (100) est placé dans le récipient de cuisson, au moins un tube est prévu pour se trouver au-dessus du niveau de la viande cuite et au moins un tube est prévu pour se trouver au-dessous du niveau de la viande cuite ; et
   (c) un moyen d'addition d'eau au récipient.

8. Système selon la revendication 7, comprenant en outre une boîte poreuse (200) prévue pour être disposée au-dessous du niveau de la viande cuite, et au moins un tube disposé dans la dite boîte (200).

9. Procédé d'extraction de graisse à partir d'un mélange de viande au moyen d'un appareil d'extraction, comprenant les étapes de :

   (a) cuisson du mélange de viande de façon à former un mélange de viande cuite sensiblement émiettée, incluant des matières grasses liquéfiées et un bouillon ;
   (b) addition d'une quantité suffisante d'eau à une température supérieure à 82°C (180°F) environ au mélange de viande, pour que les matières grasses de la viande flottent au-dessus du mélange cuit ;
   (c) agitation du mélange de viande ;
   (d) attente que les matières grasses liquéfiées flottent au-dessus du mélange de viande en une couche de matières grasses définie ;
   (e) aspiration de la couche de matières grasses par un premier tube d'aspiration ;
   (f) agitation du mélange de viande pour libérer les matières grasses liquéfiées restantes ;
   (g) aspiration des matières grasses liquides restantes et du bouillon au moyen d'un deuxième tube d'aspiration placé à une position plus basse que le premier tube d'aspiration ; et
   (h) aspiration de l'eau restante et du bouillon au moyen d'un troisième tube d'aspiration placé à une position plus basse que le deuxième tube d'aspiration.

10. Procédé selon la revendication 9, comprenant en outre l'étape de :

   (i) addition d'un composé absorbant l'eau au mélange de viande produit à l'étape (h).

11. Procédé selon la revendication 10, dans lequel le composé absorbant l'eau est choisi dans le groupe comprenant des flocons d'avoine, des fibres d'avoine, des fibres de blé et des céréales, et leurs mélanges.

12. Procédé selon la revendication 10 ou 11, dans lequel un agent aromatisant est ajouté à l'étape (i).

13. Procédé selon la revendication 12, dans lequel l'agent aromatisant est un arôme de crêpe de maïs.

14. Procédé selon une quelconque des revendications 9 à 13, dans lequel on ajoute de l'eau en quantité suffisante pour qu'au moins 60% en poids des matières grasses de la viande crue flottent au-dessus du mélange de viande.

2

2b

4

2a

6

8

9

FIG. 1

12

14

10

33b  33a

15

16

FIG. 3

**FIG. 2a**

**FIG. 2b**

FIG. 2c

FIG. 4

FIG. 6

FIG. 5a

FIG. 5b

FIG. 5c

EVAPORATE

38
100 LBS. OF RAW MEAT INCLUDES 25% FAT

40
COOK AND DRAIN

42
66 LBS. OF COOKED MEAT INCLUDING ABOUT 13% FAT

44
FLAVOR AND ABSORBANT

46
MEAT PRODUCT IS 108 LBS. YIELD WITH 8% FAT

DRAIN

10 LBS. OF FLAVORING/ WATER ABSORBANT. 34 LBS. OF WATER OR BROTH

FIG. 7

EP 0 781 108 B1

FIG. 8

FIG. 9

FIG. IO

EP 0 781 108 B1

FIG. 11

FAT: 19 LBS
BROTH: 39 LBS

100 LBS MEAT
25% FAT → COOKING → FAT SEPARATION → FLAVORING AND YIELD INCREASE → 110 LBS COOKED FLAVORED MEAT

FAT: 6–8 %

HOT WATER
60 LBS

FLAVOR/
WATER ABSORBER
9.8 LBS

## FIG. 12

EP 0 781 108 B1